# EUROPÄISCHE PATENTSCHRIFT

(11) **EP 2 522 417 B1**
(45) Veröffentlichungstag und Bekanntmachung des Hinweises auf die Patenterteilung: **20.12.2017**
(21) Anmeldenummer: 12164319.1
(22) Anmeldetag: 16.04.2012
(51) Int. Cl.: B01D 53/50, B01D 53/79

(54) **Verfahren zur Behandlung eines Rauchgases und Rauchgasleitungsbedüsungsvorrichtung**
Process for treating flue gases and flue gas conduit jetting device
Procédé de traitement de gaz de fumée et dispositif de pulvérisation de conduite de gaz de fumée

(30) Priorität: 13.05.2011 DE 102011050331
(43) Veröffentlichungstag der Anmeldung: 14.11.2012
(73) Patentinhaber: Mitsubishi Hitachi Power Systems Europe GmbH, 47059 Duisburg (DE)
(72) Erfinder: Papenheim, Georg, 47647 Kerken (DE); Haske, Thomas, 46569 Hünxe (DE); Oploh, Lothar, 47638 Straelen (DE); Vollmer, Bernd, 47800 Krefeld (DE)
(74) Vertreter: Viering, Jentschura & Partner mbB Patent- und Rechtsanwälte

(56) Entgegenhaltungen:
- EP-A2- 0 891 805
- DE-A1- 10 332 259
- US-A- 4 127 621
- US-A- 4 687 649
- US-A1- 2005 008 555
- US-B2- 7 819 959

## Beschreibung

Die Erfindung richtet sich auf eine Rauchgasleitungsbedüsungsvorrichtung, die in einer Rauchgasleitung zwischen einem Kraftwerkskessel und einem dem Kraftwerkskessel zugeordneten Gaswäscher angeordnet ist.

Weiter richtet sich die Erfindung auf einen Gaswäscher einer Kraftwerksanlage, insbesondere Kohlekraftwerk, mit einem Rauchgasleitungsanschluss, über welchen der Gaswäscher über eine Rauchgasleitung mit einem Kraftwerkskessel verbunden ist.

Ferner richtet sich die Erfindung auf ein Verfahren zur Behandlung eines in einer Rauchgasleitung zwischen einem Kraftwerkskessel und einem zugeordneten Gaswäscher strömenden Rauchgases.

Ein Gaswäscher, auch Absorber genannt, einer Kraftwerksanlage, insbesondere einer Kohlekraftwerksanlage, dient dazu, das in der Kraftwerksanlage entstehende Rauchgas zu reinigen. Üblicherweise wird ein Gaswäscher dazu verwendet, Schwefeldioxid aus dem Rauchgas herauszuwaschen. Dazu wird das Rauchgas in dem Gaswäscher mit einem Flüssigkeitsstrom in Kontakt gebracht, um Bestandteile des Rauchgasstromes, beispielsweise Schwefeldioxid, in dem Flüssigkeitsstrom aufzunehmen und über den Flüssigkeitsstrom abzuführen. Dies geschieht während der Kraftwerkskessel der Kraftwerksanlage in Betrieb ist, d. h. sich in einer Betriebsphase befindet. Ist der Kraftwerkskessel nicht in Betrieb, beispielsweise bei Wartungs- oder Reparaturarbeiten, so dass es zu kurzzeitigen Stillständen des Kraftwerkskessels kommt, besteht aufgrund der verbleibenden großen Wärmemengen in dem Kraftwerkskessel des Kraftwerkes die Gefahr, dass heißes Rauchgas über eine Rauchgasleitung in einen Innenraum des Gaswäschers gelangen kann. Dadurch, dass das Rauchgas hierbei üblicherweise eine sehr hohe Temperatur aufweist, kann es passieren, dass der Gaswäscher, insbesondere die Gummierung des Gaswäschers, und/oder eine dem Gaswäscher nachgeschaltete Einrichtung beschädigt wird. US 7 819 959 B2 offenbart eine an eine Verbrennungsanlage angeschlossene Rauchgasreinigungsanlage, die mit einer Quenchzone ausgerüstet ist. Die Quenchzone befindet sich im Rauchgasleitungsanschluss des Gaswäschers und weist Fluidversorgungssysteme und Düsen auf, welche in Reihe entlang der Querschnittsfläche angeordnet sind. Aufgabe der Erfindung ist es daher, eine Lösung zu schaffen, mittels der Beschädigungen eines Gaswäschers und/oder einer dem Gaswäscher nachgeschalteten Einrichtung durch aus einem Kraftwerkskessel ausströmendes heißes Rauchgas während einer Nichtbetriebsphase des Kraftwerkskessels verhindert werden können.

Bei einer Rauchgasleitungsbedüsungsvorrichtung der eingangs näher bezeichneten Art wird die Aufgabe dadurch gelöst, dass die Rauchgasleitungsbedüsungsvorrichtung im Bereich eines Rauchgasleitungsanschlusses des Gaswäschers angeordnet und ausgelegt ist, während einer auf eine Betriebsphase folgenden Nichtbetriebsphase des Kraftwerkskessels Kühlfluid gerichtet auf in der Rauchgasleitung strömendes Rauchgas auszuleiten. Bei einem Gaswäscher der eingangs näher bezeichneten Art wird die Aufgabe dadurch gelöst, dass im Bereich eines Rauchgasleitungsanschlusses des Gaswäschers eine Rauchgasleitungsbedüsungsvorrichtung nach einem der Ansprüche 8 bis 12 angeordnet ist.

Bei einem Verfahren der eingangs näher bezeichneten Art wird die Aufgabe dadurch gelöst, dass das strömende Rauchgas während einer auf eine Betriebsphase folgenden Nichtbetriebsphase des Kraftwerkskessels vor oder bei Eintritt in den nachgeordneten Gaswäscher oder Absorber mit einem Kühlfluid beaufschlagt oder besprüht, insbesondere bedüst, wird.

Ferner wird die Aufgabe durch eine Kraftwerksanlage umfassend einen Gaswäscher nach Anspruch 15 gelöst. Zweckmäßige Ausgestaltungen und vorteilhafte Weiterbildungen sind in den Unteransprüchen angegeben.

Durch die Beaufschlagung des aus einem Kraftwerkskessel ausströmenden Rauchgases vor oder bei Eintritt in einen nachgeordneten Gaswäscher mit einem Kühlfluid, wie beispielsweise Wasser, beim Passieren der zwischen dem Kraftwerkskessel und dem Gaswäscher angeordneten Rauchgasleitung in einer Nichtbetriebsphase des Kraftwerkskessels, d. h. einem Stillstand des Kraftwerkskessels, über die Rauchgasleitungsbedüsungsvorrichtung ist es möglich, das Rauchgas vor oder während des Eintrittes in den Gaswäscher zu kühlen, so dass die Temperatur des heißen Rauchgases reduziert ist, wenn das Rauchgas in den Innenraum des Gaswäschers über die Rauchgasleitung im Bereich des Rauchgasleitungsanschlusses des Gaswäschers einströmt. Dadurch können Beschädigungen des Gaswäschers, insbesondere im Bereich der Gummierung des Gaswäschers, im Bereich der Sprühebenen und/oder des Tropfenabscheiders des Gaswäschers und/oder Beschädigungen an einer dem Gaswäscher nachgeschalteten Einrichtung durch zu heißes Rauchgas in der Nichtbetriebsphase des Kraftwerkskessels verhindert werden. Das Beaufschlagen des Rauchgases mit einem Kühlfluid hat dabei den Vorteil, dass die Abkühlung des Rauchgases sehr schnell erfolgen kann und damit sehr wirkungsvoll ist. Zudem ist durch die Ausbildung einer Rauchgasleitungsbedüsungsvorrichtung der Betrieb einer Umwälzpumpe während der Nichtbetriebsphase des Kraftwerkskessels nicht notwendig, wodurch die dadurch ansonsten entstehenden Kosten reduziert werden. Eine Beaufschlagung des Rauchgases mit dem Kühlfluid über die Rauchgasleitungsbedüsungsvorrichtung findet ausschließlich während der Nichtbetriebsphase des Kraftwerkskessels statt. Während der Betriebsphase des Kraftwerkskessels findet keine Beaufschlagung des Rauchgases mit dem Kühlfluid statt.

Nach einer bevorzugten Ausgestaltung der Erfindung weist die Rauchgasleitungsbedüsungsvorrichtung eine zentral in der Rauchgasleitung angeordnete Düse oder zwei oder mehr Düsen, welche in Reihe entlang der Querschnittsfläche der Rauchgasleitung im Bereich des Rauchgasleitungsanschlusses des Gaswäschers verteilt angeordnet sind, auf. Somit erfolgt nach einer bevorzugten Ausgestaltung der Erfindung die Beaufschlagung des einströmenden Rauchgases mit dem Kühlfluid über eine zentral in der Rauchgasleitung angeordnete Düse oder über zwei oder mehr in Reihe entlang der Querschnittsfläche der Rauchgasleitung verteilt angeordneten Düsen. Die Düsen dienen somit dazu, das in der Rauchgasleitung des Gaswäschers strömende Rauchgas möglichst gleichmäßig mit dem Kühlfluid zu beaufschlagen. Durch die Anordnung von mehreren Düsen in Reihe nebeneinander ist es möglich, eine besonders gleichmäßige Beaufschlagung des Rauchgases mit dem Kühlfluid über die gesamte Breite der Rauchgasleitung zu erreichen, wodurch die Kühlung des Rauchgases sehr effektiv mit einem hohen Wirkungsgrad erfolgen kann. Die in Reihe angeordneten Düsen sind dabei vorzugsweise in einem gleichen Abstand zueinander angeordnet. Es können aber auch mehrere Reihen mit sich über die Breite der Rohrleitung erstreckenden, in Reihe angeordneten Düsen vorgesehen sein, wobei die mehreren Reihen parallel zueinander angeordnet sind. Alternativ kann es jedoch auch vorgesehen sein, dass die Rauchgasleitungsbedüsungsvorrichtung nur eine zentral in der Rauchgasleitung angeordnete Düse aufweist, welche vorzugsweise derart ausgebildet ist, dass sie die gesamte Querschnittsfläche der Rauchgasleitung über ihre Breite bei der Beaufschlagung des Rauchgases mit dem Kühlfluid abdeckt.

Die Düse oder die Düsen sind bevorzugt in Form von Vollkegeldüsen, insbesondere Axial-Vollkegeldüsen, ausgebildet. Durch den Einsatz von Vollkegeldüsen, insbesondere Axial-Vollkegeldüsen, kann eine besonders gleichmäßige Verteilung des aus den Düsen austretenden Kühlfluids über die gesamte Kreisfläche der als Vollkegeldüsen ausgebildeten Düsen erreicht werden. Die hohe Verteilungspräzision wird durch eine zentrumsorientierte Fluidzuströmung in den Drallmischraum der Düse erzielt. Der Drallkörper der Vollkegeldüse gewährleistet aufgrund seiner großen Durchflussöffnungen eine hohe Betriebssicherheit. Zudem zeichnen sich Vollkegeldüsen durch eine einfache und schnelle Anpassung an die jeweiligen Betriebsverhältnisse aus.

Die Rauchgasleitungsbedüsungsvorrichtung weist nach einer weiter bevorzugten Ausgestaltung ein eine Rohrleitung aufweisendes Fluidversorgungssystem auf, wobei in Reihe angeordnete Düsen über die Rohrleitung miteinander verbunden sind. Somit ist es bevorzugt vorgesehen, dass das Fluid den Düsen über genau eine Rohrleitung eines Fluidversorgungssystems der Rauchgasleitungsbedüsungsvorrichtung zugeführt wird. Die Düsen sind somit vorzugsweise über eine gemeinsame Rohrleitung miteinander verbunden, über welche die Düsen mit dem Kühlfluid durch Zuleiten des Kühlfluids über das Fluidversorgungssystem versorgt werden. Die Regelung und Steuerung der Zuführung des Kühlfluids hin zu den Düsen kann somit möglichst einfach, ohne großen Aufwand erfolgen. Es ist dadurch auch möglich, die Rauchgasleitungsbedüsungsvorrichtung nachträglich in bereits bestehende Rauchgasleitungen im Bereich eines Gaswäschers einzubauen. Alternativ zu der genau einen Rohrleitung eines Fluidversorgungssystems können aber auch mehrere Rohrleitungen vorgesehen sein.

Das Fluidversorgungssystem weist vorzugsweise eine Durchflussmengenüberwachung zur Überwachung der Menge an auszuleitenden Kühlfluid auf. Hierdurch ist zu jeder Zeit die Menge an ausgeleiteten Kühlfluid bestimmbar, wodurch der Zufluss an Kühlfluid hin zu den Düsen innerhalb der Rohrleitungen an unterschiedliche Randbedingungen angepasst und auch die Funktion des Fluidversorgungssystems kontinuierlich überwacht werden kann.

Das Fluidversorgungssystem weist vorzugsweise eine Regelarmatur oder eine Blende zur Anpassung der Menge an auszuleitenden Kühlfluid auf. Mittels der Regelarmatur kann eine optimale Anpassung der Menge des über die Düsen ausgeleiteten Kühlfluids variabel eingestellt und geregelt werden, um eine möglichst effektive Kühlung des Rauchgases auf die gewünschte Temperatur zu erreichen. Die Blende ermöglicht eine Einstellung der Menge an auszuleitenden Kühlfluid auf einen konstanten Wert, so dass hiermit die Höhe der Durchflussmenge fest eingestellt wird.

Alternativ ist es auch möglich, auf eine Durchflussmengenüberwachung und eine Regelarmatur oder Blende zu verzichten und anstelle dessen die Menge an auszuleitendem Kühlfluid auf den bei der oder den Düsen verwendeten Düsentyp derart einzustellen, dass eine konstante Menge an Kühlfluid über die Düse(n) auf den Rauchgasstrom ausgeleitet wird.

Vorzugsweise ist es vorgesehen, dass der Düse oder den Düsen eine konstante Menge an Kühlfluid während der Beaufschlagung des Rauchgases mit dem Kühlfluid zugeführt wird. Dabei wird ein Soll-Wert für die Menge an Kühlfluid festgelegt, wobei dieser Soll-Wert an die Regelarmatur übermittelt wird, um die Regelung in Abhängigkeit von diesem vorher festgelegten Soll-Wert durchzuführen.

Weiter ist es bevorzugt vorgesehen, dass die Rauchgasleitungsbedüsungsvorrichtung zumindest abschnittsweise beheizbar ist. Dadurch kann die Temperatur des Kühlfluids optimal an die Betriebsbedingungen angepasst werden, um den Grad der Kühlung des Rauchgases gezielt einstellen zu können. Hierfür sind vorzugsweise entlang der Rohrleitungen der Rauchgasleitungsbedüsungsvorrichtung zumindest abschnittsweise Heizvorrichtungen angeordnet. Die Rauchgasleitungsbedüsungsvorrichtung weist ein Spülgassystem auf, welches mit dem Fluidversorgungssystem verbunden ist. Mittels des Spülgassystems ist es möglich, dass während der Betriebsphase des Kraftwerkskessels, d. h. wenn das die Rauchgasleitung passierende Rauchgas nicht über die Rauchgasleitungsbedüsungsvorrichtung mit einem Kühlfluid beaufschlagt wird, die Rauchgasleitungsbedüsungsvorrichtung mit einem Gas, vorzugsweise Luft, gespült wird. Das Spülgassystem ermöglicht es, dass das Fluidversorgungssystem, insbesondere die Rohrleitungen des Fluidversorgungssystems, und die Düsen mit einem Gas gespült werden, wodurch verhindert werden kann, dass die Düsen und das Fluidversorgungssystem durch Korrosion, insbesondere durch eine Schwefelsäurekondensation des die Rauchgasleitung passierenden Rauchgases, beschädigt werden oder die Düsen verstopfen. Das Spülgassystem weist vorzugsweise ein Gebläse, insbesondere ein Oxidationsluftgebläse, auf, über welches das Gas durch die Rohrleitungen des Fluidversorgungssystems und die Düsen geführt wird.

Das Spülgassystem weist ferner bevorzugt eine Drosselarmatur und eine Durchflussmengenüberwachung auf. Über die Drosselarmatur kann die Menge an über das Gebläse in die Rohrleitungen des Fluidversorgungssystems und die Düsen eingeblasenen Gases genau eingestellt und geregelt werden und mittels der Durchflussmengenüberwachung überwacht werden. Es kann dabei aber auch vorgesehen sein, dass nur die Drosselarmatur oder nur die Durchflussmengenüberwachung ausgebildet ist.

Weiter weist das Spülgassystem vorzugsweise eine Rückschlagarmatur auf. Die Rückschlagarmatur verhindert ein Eindringen von Rauchgas in die Rohrleitung des Spülgassystems bei einem Wegfall des Vordruckes der Luft von dem Gebläse, insbesondere dann, wenn eine am Übergang zwischen dem Spülgassystem und dem Fluidversorgungssystem angeordnete Absperrarmatur während der Betriebsphase des Kraftwerkskessels nicht geschlossen ist.

Das erfindungsgemäße Verfahren findet insbesondere dann in vorteilhafter Weise Anwendung, wenn der Gaswäscher Bestandteil einer Rauchgasentschwefelungsanlage ist, insbesondere einer solchen ist, die keinen Rauchgas an der Rauchgasentschwefelungsanlage vorbeiführenden Rauchgasleitungsbypass aufweist. Gerade bei solchen Anlagen besteht nicht die Möglichkeit, das in der Stillstandsphase noch nachströmende heiße Rauchgas an dem Rauchgaswäscher, d.h. diesem Teil der Rauchgasentschwefelungsanlage, vorbeizuführen. Hier ist es dann von Vorteil, das nachströmende Rauchgas vor oder bei Eintritt in den nachgeordneten Gaswäscher oder Absorber durch Besprühung mit einem Kühlfluid zu kühlen. Bei dem Kühlfluid handelt es sich vorzugsweise um Kühlflüssigkeit, insbesondere Wasser. Insbesondere bei Gasentschwefelungsanlagen ist es weiterhin zweckmäßig, wenn das strömende Rauchgas dann mit dem Kühlfluid beaufschlagt oder besprüht wird, wenn die Rauchgastemperatur oder Temperatur in der Rauchgasleitung ≥ 70 °C beträgt.

Um während der Stillstandsphase genügend Auffangvolumen insbesondere im Sumpf eines Sprühwäschers oder Absorbers, d.h. des Gaswäschers, bereit zu halten, sieht die Erfindung weiterhin vor, dass vor dem Zustandswechsel in die Nichtbetriebsphase des Kraftwerkskessels der Füllstand des Gaswäschers abgesenkt wird. Hierbei ist es dann zweckmäßig, wenn in dem Gaswäscher oder Absorber ein solches Volumen oder Auffangvolumen bereit gestellt wird, dass über einen Zeitraum von bis zu 36 Stunden Kühlfluid versprüht werden und vom Gaswäscher aufgefangen werden kann.

Insofern steht die Rauchgasleitungsbedüsungsvorrichtung in einer fluidleitenden Verbindung mit dem Innenraum des Gaswäschers oder Absorbers. In besonders zweckmäßiger Weiterbildung sowohl der Rauchgasleitungsbedüsungsvorrichtung als auch des Verfahrens ist vorgesehen, dass die Rauchgasleitungsbedüsungsvorrichtung nicht nur in Verbindung mit einem Fluidversorgungssystem steht, das das Kühlfluid bereitstellt, sondern auch mit einem Kühlgassystem verbunden ist, welches es ermöglicht, die Rauchgasleitungsbedüsungsvorrichtung während der Betriebsphase des Kraftwerkskessels mit einem Gas zu spülen.

Nachfolgend wird die Erfindung unter Bezugnahme auf die anliegende Zeichnung anhand einer bevorzugten Ausführungsform näher erläutert. Die einzige Figur zeigt eine schematische Darstellung einer Rauchgasleitung im Bereich eines Rauchgasleitungsanschlusses eines Gaswäschers gemäß der Erfindung.

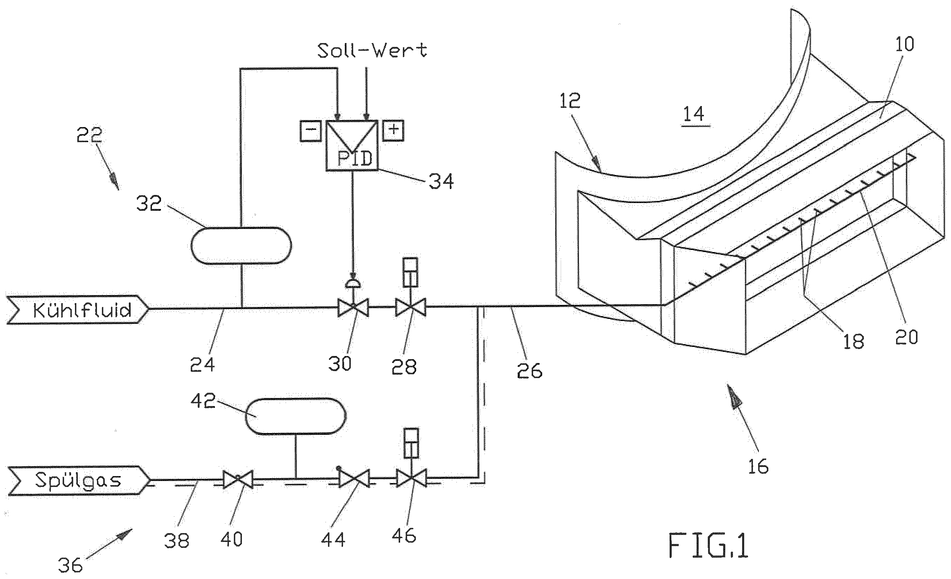

Die einzige Figur 1 zeigt eine Rauchgasleitung 10 im Bereich eines Rauchgasleitungsanschlusses eines Gaswäschers 12 zum Reinigen des aus einem Kraftwerkskessel austretenden Rauchgases, wobei der Gaswäscher 12 über die Rauchgasleitung 10 mit einem Kraftwerkskessel (hier nicht gezeigt) verbunden ist, über welche das Rauchgas in einen Innenraum 14 des Gaswäschers 12 einströmt. In der Rauchgasleitung 10 im Bereich des Rauchgasleitungsanschlusses des Gaswäschers 12 ist eine Rauchgasleitungsbedüsungsvorrichtung 16 zum Beaufschlagen des in den Innenraum 14 des Gaswäschers 12 einströmenden Rauchgases mit einem Kühlfluid, wie zum Beispiel Wasser, angeordnet. Die Bedüsung bzw. Beaufschlagung des einströmenden Rauchgases mit dem Kühlfluid erfolgt in einer auf eine Betriebsphase des Kraftwerkskessels folgenden Nichtbetriebsphase des Kraftwerkskessels, wenn der Kraftwerkskessel nicht in Betrieb ist und noch nicht ausreichend abgekühlt ist. Während des normalen Betriebes des Kraftwerkskessels erfolgt keine Beaufschlagung bzw. Bedüsung des in den Gaswäscher 12 eintretenden Rauchgases mittels des Kühlfluids über die Rauchgasleitungsbedüsungsvorrichtung 16.

Die Rauchgasleitungsbedüsungsvorrichtung 16 weist bei der in der Figur gezeigten Ausführungsform fünfzehn Düsen 18 auf, welche bei der hier gezeigten Ausführungsform über eine gemeinsame Rohrleitung 20 eines Fluidversorgungssystems 22 miteinander verbunden sind. Es ist jedoch auch möglich, mehr oder weniger als fünfzehn Düsen 18 vorzusehen. Die Anzahl der vorgesehenen Düsen 18 ist vorzugsweise von der Größe der Querschnittsfläche der Rauchgasleitung 10 und von der notwendigen Durchflussmenge des Kühlfluids abhängig. Die Düsen 18 sind beispielsweise in Form von Axial-Vollkegeldüsen ausgebildet. Die Düsen 18 sind bei der hier gezeigten Ausführungsform in Reihe nebeneinander, in einem gleichen Abstand zueinander entlang der Querschnittsfläche, d. h. über die gesamte Breite, der Rauchgasleitung 10 im Bereich des Rauchgasleitungsanschlusses des Gaswäschers 12 verteilt angeordnet. Vorzugsweise ist eine Reihe von Düsen 18 vorgesehen. Es ist jedoch auch möglich, dass mehrere parallel zueinander angeordnete Reihen an Düsen 18 vorgesehen sind.

Das Fördern des Kühlfluids in dem Fluidversorgungssystem 22 erfolgt über eine hier nicht gezeigte Pumpe oder ein Pumpensystem. Das Fluidversorgungssystem 22 weist mehrere Rohrleitungen 20, 24, 26 sowie eine Absperrarmatur 28, eine Regelarmatur 30 und eine Durchflussmengenüberwachung 32 zur Überwachung der die Rohrleitungen 20, 24, 26 passierenden Menge an Kühlfluid auf. Ferner kann das Fluidversorgungssystem 22 ein Bypassventil und ein oder mehrere Absperrklappen, beide hier nicht gezeigt, aufweisen. Es ist dabei möglich, dass für das Fluidversorgungssystem 22 bereits bestehende Bauteile und Regelungseinheiten, die zur Flüssigkeitsversorgung innerhalb des Gaswäschers 12 zum Reinigen des Rauchgases während der Betriebsphase des Kraftwerkskessels genutzt werden, verwendet werden können, so dass für die Rauchgasleitungsbedüsungsvorrichtung 16 bereits bestehende Bauteile und Regelungen des Gaswäschers 12 genutzt werden können. Dadurch können der Installationsaufwand und die Kosten hierfür erheblich reduziert werden. Zudem kann die Rauchgasleitungsbedüsungsvorrichtung 16 in bereits bestehende Gaswäscher 12 leicht eingebaut bzw. nachgerüstet werden. Um eine gewünschte Temperatur des Fluids gezielt einstellen zu können, kann die Rauchgasleitungsbedüsungsvorrichtung 16 zumindest abschnittsweise über eine Heizeinrichtung, hier nicht gezeigt, beheizbar sein.

Die Menge des zugeführten Kühlfluids wird mit Hilfe der Durchflussmengenüberwachung 32, einem Regler 34 und der Regelarmatur 30 geregelt. Um die Funktion der Düsen 18 zu gewährleisten, wird kontinuierlich Kühlfluid, vorzugsweise eine konstante Menge an Kühlfluid, den Düsen 18 zugeführt. Hierfür wird ein Soll-Wert für die Menge an zuzuführendem Kühlfluid fest eingestellt und an den Regler 34 übertragen. Der Soll-Wert liegt vorzugsweise zwischen 30 und 200 l/h pro Quadratmeter Querschnittsfläche der Rauchgasleitung 10.

Während des Betriebes des Kraftwerkskessels, wenn kein Kühlfluid über die Düsen 18 zur Beaufschlagung des einströmenden Rauchgases ausgegeben wird, werden die Rohrleitungen 20, 26 des Fluidversorgungssystems 22 und die Düsen 18 der Rauchgasleitungsbedüsungsvorrichtung 16 mit einem Gas in Form von Luft gespült, um Korrosionserscheinungen an den Düsen 18 und den Rohrleitungen 20, 26 zu verhindern. Hierfür ist ein Spülgassystem 36 vorgesehen, welches mit dem Fluidversorgungssystem 22 verbunden ist. Die Verbindung des Spülgassystems 36 mit dem Fluidversorgungssystem 22 ist zwischen der Absperrarmatur 28 und den Düsen 18, an der Rohrleitung 26 des Fluidversorgungssystems 22 ausgebildet. Während des Spülens mit dem als Luft ausgebildeten Gas ist die Absperrarmatur 28 geschlossen, so dass das Gas nur die Rohrleitungen 20, 26 und die Düsen 18 passieren kann und nicht in den restlichen Bereich des Fluidversorgungssystems 22 eindringen kann.

Das Spülgassystem 36 weist eine Rohrleitung 38 auf, über welche das Gas zu dem Fluidversorgungssystem 22 geführt wird. Die Rohrleitung 38 des Spülgassystems 36 ist mit der Rohrleitung 26 des Fluidversorgungssystems 22 verbunden. Entlang der Rohrleitung 38 ist eine Drosselarmatur 40, eine Durchflussmengenüberwachung 42, eine Rückschlagarmatur 44 und eine Absperrarmatur 46 angeordnet. Mittels der Drosselarmatur 40 wird die Menge an Gas zum Spülen eingestellt und mittels der Durchflussmengenüberwachung 42 überwacht. Die Rückschlagarmatur 44 verhindert ein Endringen des Rauchgases in die Rohrleitung 38 des Spülgassystems 36 bei Wegfall des Vordruckes des Gases, falls die elektrisch betätigte Absperrarmatur 46 nicht geschlossen ist.

Die Rauchgasleitungsbedüsungsvorrichtung 16 dient dazu, das heiße Rauchgas, das nach dem Abfahren der Kraftwerkskessels von der Betriebsphase in die Nichtbetriebsphase noch in den Gaswäscher 12 strömt, zu kühlen.

Die Beaufschlagung des in den Innenraum 14 des Gaswäschers 12 eintretenden Rauchgases erfolgt, sobald der Kraftwerkskessel abgefahren ist und sich in der Nichtbetriebsphase befindet.

Vor dem Start der Beaufschlagung des einströmenden Rauchgases mit dem Kühlfluid über die Rauchgasleitungsbedüsungsvorrichtung 16 sind vorzugsweise die Regelarmatur 30 und die Absperrarmatur 28 des Fluidversorgungssystems 22 geschlossen. Die Drosselarmatur 40 und die Absperrarmatur 46 des Spülgassystems 36 sind geöffnet. Das Schließen bzw. Öffnen der Regelarmatur 30, der Absperrarmatur 28 und der Absperrarmatur 46 erfolgt dabei vorzugsweise pneumatisch oder elektrisch. Das Schließen bzw. Öffnen der Drosselarmatur 40 erfolgt vorzugsweise manuell.

Vor dem Abfahren des Kraftwerkskessels, d. h. vor dem Zustandswechsel von der Betriebsphase in die Nichtbetriebsphase des Kraftwerkskessels, wird der Füllstand des Gaswäschers 12 durch ein erhöhtes Ausschleusen der in dem Innenraum 14 des Gaswäschers 12 enthaltenden Gipssuspension abgesenkt. Dadurch kann während der Nichtbetriebsphase des Kraftwerkskessels das über die Rauchgasleitungsbedüsungsvorrichtung 16 zugeführte Kühlfluid in dem Innenraum 14 des Gaswäschers 12 aufgenommen werden, ohne dass dieser überläuft.

Zum Start der Beaufschlagung des einströmenden Rauchgases mit dem Kühlfluid über die Rauchgasleitungsbedüsungsvorrichtung 16 wird zunächst die Absperrarmatur 46 des Spülgassystems 36 geschlossen und anschließend die Absperrarmatur 28 des Fluidversorgungssystems 22 geöffnet, so dass kein Gas über das Spülgassystem 36 mehr in das Fluidversorgungssystem 22 strömen kann und stattdessen das Kühlfluid über das Fluidversorgungssystem 22 den Düsen 18 zur Beaufschlagung des in den Innenraum 14 des Gaswäschers 12 einströmenden Rauchgases zugeführt werden kann.

Während der Beaufschlagung des Rauchgases mit dem Kühlfluid wird der Füllstand des Gaswäschers 12 überwacht, um ein Überlaufen des Gaswäschers 12 zu verhindern, da nicht die gesamte Menge an Kühlfluid, welche mittels der Düsen 18 in die Rauchgasleitung 10 des Gaswäschers 12 eingedüst wird, verdampft, sondern ein Teil des verdüsten Kühlfluids über die Rauchgasleitung 10 in den Innenraum 14 des Gaswäschers 12 gelangt. Ist ein Maximum des Füllstandes des Gaswäschers 12 nahezu erreicht, wird die Temperatur in der Rauchgasleitung 10 überprüft. Eine Abschaltung der Zufuhr des Kühlfluids über die Rauchgasleitungsbedüsungsvorrichtung 16 erfolgt dann, wenn die Temperatur in der Rauchgasleitung ungefähr < 70°C beträgt. Ist die Temperatur ungefähr ≥ 70°C wird die Beaufschlagung des Rauchgases mit dem Kühlfluid fortgesetzt. Die überlaufende Gipssuspension wird in diesem Fall in einem Pumpensumpf des Gaswäschers 12 aufgefangen. Besteht auch die Gefahr, dass der Pumpensumpf überläuft, wird die Gipssuspension in einen Entleerungsbehälter, hier nicht gezeigt, gepumpt.

Vorzugsweise erfolgt grundsätzlich die Zufuhr von Kühlfluid über die Rauchgasleitungsbedüsungsvorrichtung 16 in einer Nichtbetriebsphase des Kraftwerkskessels, wenn die Temperatur in der Rauchgasleitung ungefähr ≥ 70 °C beträgt. Beträgt die Temperatur in der Rauchgasleitung ungefähr < 70 °C kann die Beaufschlagung mit dem Kühlfluid über die Rauchgasleitungsbedüsungsvorrichtung 16 gestoppt und die Rauchgasleitungsbedüsungsvorrichtung 16 abgeschaltet werden. Hierfür wird zunächst die Absperrarmatur 28 des Fluidversorgungssystems 22 geschlossen. Anschließend wird die Absperrarmatur 46 des Spülgassystems 36 wieder geöffnet.

Zur Überwachung der Funktionsfähigkeit des Fluidversorgungssystems 22 und des Spülgassystems 36 weist sowohl das Fluidversorgungssystem 22 als auch das Spülgassystem 36 jeweils die Durchflussmengenüberwachung 32, 42 auf. Ist das Fluidversorgungssystem 22 zur Beaufschlagung des Rauchgases mit dem Kühlfluid nicht in Betrieb, sondern das Spülgassystem 36, wird ein Alarm von der Durchflussmengenüberwachung 42 ausgegeben, wenn die Durchflussmenge an Gas einen Minimumwert unterschreitet. Wenn das Fluidversorgungssystem 22 zur Beaufschlagung des Rauchgases mit dem Kühlfluid in Betrieb ist, wird ein Alarm von der Durchflussmengenüberwachung 32 ausgelöst, wenn die Durchflussmenge an Kühlfluid einen Minimumwert unterschreitet.

## Patentansprüche

1. Verfahren zur Behandlung eines in einer Rauchgasleitung (10) zwischen einem Kraftwerkskessel und einem zugeordneten Gaswäscher (12) strömenden Rauchgases im Bereich eines Rauchgasleitungsanschlusses des Gaswäschers (12),,
**dadurch gekennzeichnet,**
**dass** der Kraftwerkskessel aus einer Betriebsphase, in welcher er in Betrieb ist, in eine folgende Nichtbetriebsphase, während welcher er nicht in Betrieb ist und sich im Stillstand befindet, abgefahren wird und während auf eine Betriebsphase folgender Nichtbetriebsphasen des noch nicht ausreichend abgekühlten Kraftwerkskessels aus dem Kraftwerkskessel ausströmendes Rauchgas mittels einer Rauchgasleitungsbedüsungsvorrichtung (16) vor oder bei Eintritt in den nachgeordneten Gaswäscher (12) oder Absorber mit einem Kühlfluid beaufschlagt oder besprüht, insbesondere bedüst, wird und während der Betriebsphase des Kraftwerkskessels die Rauchgasleitungsbedüsungsvorrichtung (16) mit einem Gas gespült wird.

2. Verfahren nach Anspruch 1, **dadurch gekennzeichnet, dass** das strömende Rauchgas mit einer Kühlflüssigkeit, insbesondere Wasser, beaufschlagt oder besprüht wird.

3. Verfahren nach Anspruch 1 oder 2, **dadurch gekennzeichnet, dass** das strömende Rauchgas beaufschlagt oder besprüht wird, wenn die Rauchgastemperatur oder die Temperatur in der Rauchgasleitung ≥ 70 °C beträgt.

4. Verfahren nach einem der Ansprüche 1 bis 3, **dadurch gekennzeichnet, dass** vor dem Zustandswechsel in die Nichtbetriebsphase des Kraftwerkskessels der Füllstand des Gaswäschers (12) abgesenkt wird.

5. Verfahren nach einem der Ansprüche 1 bis 4, **dadurch gekennzeichnet,**
**dass** das Kühlfluid über eine im Bereich eines Rauchgasleitungsanschlusses des Gaswäschers (12) insbesondere in der Rauchgasleitung (10) angeordnete Rauchgasleitungsbedüsungsvorrichtung (16) gerichtet auf das in der Rauchgasleitung (10) strömende Rauchgas ausgeleitet wird.

6. Verfahren nach Anspruch 5, **dadurch gekennzeichnet, dass** das Ausleiten des Kühlfluids über eine zentral in der Rauchgasleitung (10) angeordnete Düse (18) oder über zwei oder mehr in Reihe entlang der Rauchgasleitung (10) verteilt angeordnete Düsen (18) der Rauchgasleitungsbedüsungsvorrichtung (16) erfolgt, wobei das Kühlfluid der Düse (18) oder den Düsen (18) vorzugsweise über eine Rohrleitung (20, 24, 26) eines Fluidversorgungssystems (22) zugeführt wird.

7. Verfahren nach einem der Ansprüche 1 bis 6, **dadurch gekennzeichnet, dass** während der Nichtbetriebsphase des Kraftwerkskessels eine konstante Menge an Kühlfluid, insbesondere 30-200 l/h pro Quadratmeter Querschnittsfläche der Rauchgasleitung (10), versprüht, vorzugsweise der Düse (18) oder den Düsen (18) zugeführt wird.

8. Rauchgasleitungsbedüsungsvorrichtung (16) zur Durchführung des Verfahrens nach einem der Ansprüche 1 bis 7, die in einer Rauchgasleitung (10) zwischen einem Kraftwerkskessel und einem dem Kraftwerkskessel zugeordneten Gaswäscher (12) im Bereich eines Rauchgasleitungsanschlusses des Gaswäschers (12) anordenbar ist,
**dadurch gekennzeichnet,**
**dass** die Rauchgasleitungsbedüsungsvorrichtung (16) dazu ausgelegt ist, während einer Nichtbetriebsphase des Kraftwerkskessels, in welche der Kraftwerkskessel aus einer Betriebsphase, in welcher er in Betrieb ist, abgefahren wird und in welcher er nicht in Betrieb ist sowie sich im Stillstand befindet und die auf eine Betriebsphase folgt, Kühlfluid gerichtet auf in der Rauchgasleitung (10) strömendes Rauchgas auszuleiten, und dass die Rauchgasleitungsbedüsungsvorrichtung (16) ein Spülgassystem (36) aufweist, mittels welchem die Rauchgasleitungsbedüsungsvorrichtung (16) während der Betriebsphase des Kraftwerkskessels, während welcher das die Rauchgasleitung (10) passierende Rauchgas nicht mit Kühlfluid beaufschlagt wird, mit einem Gas gespült wird.

9. Rauchgasleitungsbedüsungsvorrichtung nach Anspruch 8, **dadurch gekennzeichnet, dass** die Rauchgasleitungsbedüsungsvorrichtung (16) eine zentral in der Rauchgasleitung (10) angeordnete Düse (18) aufweist oder dass die Rauchgasleitungsbedüsungsvorrichtung (16) zwei oder mehr Düsen (18), welche in Reihe entlang der Querschnittsfläche der Rauchgasleitung (10) verteilt angeordnet sind, aufweist,
wobei vorzugsweise die Rauchgasleitungsbedüsungsvorrichtung (16) ein eine Rohrleitung (20, 24, 26) aufweisendes Fluidversorgungssystem (22) aufweist, wobei in Reihe angeordnete Düsen (18) über die Rohrleitung (20) miteinander verbunden sind.

10. Rauchgasleitungsbedüsungsvorrichtung nach Anspruch 9, **dadurch gekennzeichnet, dass** die Düse (18) oder die Düsen (18) in Form von Vollkegeldüsen, insbesondere Axial-Vollkegeldüsen, ausgebildet sind und/oder dass die Rauchgasleitungsbedüsungsvorrichtung (16) zumindest abschnittsweise beheizbar ist.

11. Rauchgasleitungsbedüsungsvorrichtung nach Anspruch 9 oder 10, **dadurch gekennzeichnet, dass** das Fluidversorgungssystem (22) eine Durchflussmengenüberwachung (32) zur Überwachung der Menge an auszuleitendem Kühlfluid aufweist und/oder eine Regelarmatur (30) oder eine Blende zur Anpassung der Menge an auszuleitendem Kühlfluid aufweist.

12. Rauchgasleitungsbedüsungsvorrichtung nach Anspruch 8, **dadurch gekennzeichnet, dass** das Spülgassystem (36) mit dem Fluidversorgungssystem (22) verbunden ist und/oder eine Drosselarmatur (40) und eine Durchflussmengenüberwachung (42) aufweist und/oder eine Rückschlagarmatur (44) aufweist.

13. Gaswäscher mit einem Rauchgasleitungsanschluss, über welchen der Gaswäscher (12) über eine Rauchgasleitung (10) mit einem Kraftwerkskessel verbunden ist, **dadurch gekennzeichnet, dass** im Bereich des Rauchgasleitungsanschlusses eine Rauchgasleitungsbedüsungsvorrichtung (16) nach einem der Ansprüche 8 bis 12 zur Durchführung des Verfahrens nach einem der Ansprüche 1 bis 7 angeordnet ist.

14. Gaswäscher nach Anspruch 13, **dadurch gekennzeichnet, dass** der Gaswäscher (12) Bestandteil einer Rauchgasentschwefelungsanlage, insbesondere einer solchen, die keinen Rauchgas an der Rauchgasentschwefelungsanlage vorbeiführenden Rauchgasleitungsbypass aufweist, ist.

15. Kraftwerksanlage, insbesondere Kohlekraftwerk, umfassend eine Rauchgasleitungsbedüsungsvorrichtung (16) nach einem der Ansprüche 8 bis 12 zur Durchführung des Verfahrens nach einem der Ansprüche 1 bis 7 sowie einen Gaswäscher (12) nach Anspruch 13 oder 14.

## Claims

1. Method for treating flue gas flowing in a flue gas line (10) between a power station boiler and an associated gas scrubber (12) in an area of a flue gas line connection of the gas scrubber (12), **characterised in that**
the power station boiler is shut down from an operating phase in which it is in operation into a subsequent non-operating phase, during which it is not in operation and is at a standstill, and whilst a non-operating phase following an operating phase of the not yet sufficiently cooled power station boiler, flue gas flowing from the power station boiler is subjected to or sprayed with, in particular jetted, with a cooling fluid by means of a flue gas line jetting device (16) prior to or during entry into the downstream gas scrubber (12) or absorber, and the flue gas line jetting device (16) is flushed with a gas during the operating phase.

2. Method according to claim 1, **characterised in that** the flowing flue gas is subject to or sprayed with a cooling fluid, in particular water.

3. Method according to claim 1 or 2, **characterised in that** the flowing flue gas is subjected or sprayed when the flue gas temperature or the temperature in the flue gas line is ≥ 70 °C.

4. Method according to one of the claims 1 to 3, **characterised in that** the fill level of the gas scrubber (12) is lowered before changing the condition of the power station boiler into the non-operating phase.

5. Method according to one of the claims 1 to 4, **characterised in that** the cooling fluid is vented via a flue gas line jetting device (16) arranged in the area of a flue gas line connection of the gas scrubber (12), in particular in the flue gas line (10), and directed at the flue gas flowing in the flue gas line (10).

6. Method according to claim 5, **characterised in that** venting the cooling fluid is realised via a nozzle (18) arranged centrally in the flue gas line (10) or via two or more nozzles (18) of the flue gas line jetting device (16) distributed in series along the flue gas line (10), wherein the cooling fluid is preferably supplied to the nozzle (18) or the nozzles (18) via a pipeline (20, 24, 26) of a fluid supply system (22).

7. Method according to one of the claims 1 to 6, **characterised in that** a constant quantity of cooling fluid, in particular 30 - 200 l/h per square metre of cross-section surface of the flue gas line (10) is to be sprayed, preferably supplied to the nozzle (18) or the nozzles (18), during the non-operating phase of the power station boiler.

8. Flue gas line jetting device (16) for carrying out the method according to one of the claims 1 to 7, which can be arranged in a flue gas line (10) between a power station boiler and a gas scrubber (12) allocated to the power station boiler in the area of a flue gas line connection of the gas scrubber (12),
**characterised in that**,
the flue gas line jetting device (16) is designed for venting cooling fluid directed at flue gas flowing in the flue gas line (10) during a non-operating phase of the power station boiler, during which the power station boiler is shut-down from an operating phase in which it is in operation into one where it is not in operation and is at a standstill, and which is followed by an operating phase, and **in that** the flue gas line jetting device (16) has a flushing gas system (36), with which the flue gas line jetting device (16) is flushed with a gas during the operating phase of the power station boiler, during which flue gas passing through the flue gas line (10) is not subjected to cooling fluid.

9. Flue gas line jetting device according to claim 8, **characterised in that** the flue gas line jetting device (16) has a nozzle (18) arranged centrally in the flue gas line (10) or that the flue gas line jetting device (16) has two or more nozzles (18) distributed in series along the cross-section surface of the flue gas line (10), wherein preferably the flue gas line jetting device (16) has a fluid supply system (22) incorporating a pipeline (20, 24, 26), wherein nozzles (18) arranged in series along the pipeline (20) are connected with each other.

10. Flue gas line jetting device according to claim 9, **characterised in that** the nozzle (18) or the nozzles (18) is/are designed in the form of full cone nozzles, in particular axial full cone nozzles and/or **in that** at least some sections of the flue gas line jetting device (16) can be heated.

11. Flue gas line jetting device according to claim 9 or 10, **characterised in that** the fluid supply system (22) has a flow volume monitor (32) for monitoring the volume of cooling fluids to be vented and/or a control valve (30) or an aperture for adjusting the volume of cooling fluid to be vented.

12. Flue gas line jetting device according to claim 8, **characterised in that** the flushing gas system (36) is connected with the fluid supply system (22) and/or has a control valve (40) and a flow volume monitor (42) and/or a non-return valve (44).

13. Gas scrubber with a flue gas line connection, via which the gas scrubber (12) is connected with a power station boiler by means of a flue gas line (10), **characterised in that** a flue gas line jetting device (16) according to one of the claims 8 to 12 is arranged in the area of the flue gas line connection for carrying out the method according to one of the claims 1 to 7.

14. Gas scrubber according to claim 13, **characterised in that** the gas scrubber (12) is part of a flue gas desulphurisation plant, in particular one that has no flue gas in the flue gas line bypass that bypasses the flue gas desulphurisation plant.

15. Power station, in particular a coal-fired power station, comprising a flue gas line jetting device (16) according to one of the claims 8 to 12 for carrying out the method according to one of the claims 1 to 7 as well as a gas scrubber (12) according to claim 13 or 14.

## Revendications

1. Procédé de traitement d'un gaz de combustion s'écoulant dans une conduite de gaz de combustion (10) entre une chaudière de centrale et un épurateur de gaz (12) correspondant, au niveau d'un raccord de conduite de gaz de combustion de l'épurateur de gaz (12),
**caractérisé en ce que**
la chaudière de centrale est passée d'une phase de fonctionnement, dans laquelle elle est en fonctionnement, dans une phase de non-fonctionnement suivante, au cours de laquelle elle n'est pas en fonctionnement et est au point mort, et le gaz de combustion s'écoulant hors de la chaudière de centrale pendant les phases de non-fonctionnement suivant une phase de fonctionnement de la chaudière de centrale non encore suffisamment refroidie est alimenté ou pulvérisé, plus particulièrement aspergé, au moyen d'un dispositif d'aspersion de conduite de gaz de combustion (16), avant ou à l'entrée dans l'épurateur de gaz (12) ou l'absorbeur disposé en aval, avec un fluide de refroidissement, et pendant la phase de fonctionnement de la chaudière de centrale, le dispositif d'aspersion de conduite de gaz de combustion (16) est rincé avec un gaz.

2. Procédé selon la revendication 1, **caractérisé en ce que** le gaz de combustion en écoulement est alimenté ou pulvérisé avec un liquide de refroidissement, plus particulièrement de l'eau.

3. Procédé selon la revendication 1 ou 2, **caractérisé en ce que** le gaz de combustion en écoulement est alimenté ou pulvérisé lorsque la température du gaz de combustion ou la température dans la conduite de gaz de combustion est ≥ 70 °C.

4. Procédé selon l'une des revendications 1 à 3, **caractérisé en ce que**, avant le changement d'état dans la phase de non-fonctionnement de la chaudière de centrale, le niveau de remplissage de l'épurateur de gaz (12) est diminué.

5. Procédé selon l'une des revendications 1 à 4, **caractérisé en ce que**
le fluide de refroidissement est évacué, par l'intermédiaire d'un dispositif d'aspersion de conduite de gaz de combustion (16) disposée au niveau d'un raccord de conduite de gaz de combustion (10) de l'épurateur de gaz (12), plus particulièrement dans la conduite de gaz de combustion (10), de façon à être dirigé vers le gaz de combustion s'écoulant dans la conduite de gaz de combustion.

6. Procédé selon la revendication 5, **caractérisé en ce que** l'évacuation du fluide de refroidissement a lieu par l'intermédiaire d'une buse (18) disposée de manière centrale dans la conduite de gaz de combustion (10) ou par l'intermédiaire de deux buses (18), ou plus, du dispositif d'aspersion de conduite de gaz de combustion (16), disposées de manière répartie, en série le long de la conduite de gaz de combustion (10), le fluide de refroidissement étant introduit dans la buse (18) ou dans les buses (18) de préférence par l'intermédiaire d'une canalisation (20, 24, 26) d'un système d'alimentation en fluide (22).

7. Procédé selon l'une des revendications 1 à 6, **caractérisé en ce que**, pendant la phase de non-fonctionnement de la chaudière de centrale, une quantité constante de fluide de refroidissement, plus particulièrement de 30 à 200 l/h par mètre carré de surface de section transversale de la conduite de gaz de combustion (10) est pulvérisée, de préférence introduite dans la buse (18) ou dans les buses (18).

8. Dispositif d'aspersion de conduite de gaz de combustion (16) pour l'exécution du procédé selon l'une des revendications 1 à 7, qui peut être disposé dans une conduite de gaz de combustion (10) entre une chaudière de centrale et un épurateur de gaz (12) correspondant à la chaudière de centrale, au niveau d'un raccord de conduite de gaz de combustion de l'épurateur de gaz (12),
**caractérisé en ce que**
le dispositif d'aspersion de conduite de gaz de combustion (16) est conçu pour évacuer, pendant une phase de non-fonctionnement de la chaudière de centrale, dans laquelle elle est passée à partir d'une phase de fonctionnement, dans laquelle elle est en fonctionnement, et dans laquelle il n'est pas en fonctionnement et se trouve au point mort, un fluide de refroidissement de manière dirigée vers un gaz de combustion s'écoulant dans la conduite de gaz de combustion (10) et **en ce que** le dispositif d'aspersion de conduite de gaz de combustion (16) comprend un système à gaz de rinçage (36) au moyen duquel le dispositif d'aspersion de conduite de gaz de combustion (16) est rincé avec un gaz pendant la phase de fonctionnement de la chaudière de centrale, pendant laquelle le gaz de combustion passant dans la conduite de gaz de combustion (10) n'est pas alimenté en fluide de refroidissement.

9. Dispositif d'aspersion de conduite de gaz de combustion selon la revendication 8, **caractérisé en ce que** le dispositif d'aspersion de conduite de gaz de combustion (16) comprend une buse (18) disposée de manière centrale dans la conduite de gaz de combustion (10) ou **en ce que** le dispositif d'aspersion de conduite de gaz de combustion (16) comprend deux buses (18) ou plus, qui sont disposées de manière répartie, en série le long de la surface de section transversale de la conduite de gaz de combustion (10), de préférence le dispositif d'aspersion de conduite de gaz de combustion (16) comprenant un système d'alimentation en fluide (22) comprenant une canalisation (20, 24, 26), les buses (18) disposées en série étant reliées entre eux par l'intermédiaire de la canalisation (20).

10. Dispositif d'aspersion de conduite de gaz de combustion selon la revendication 9, **caractérisé en ce que** la buse (18) ou les buses (18) se présentent sous la forme de buses cônes pleins, plus particulièrement de buses axiales à cônes pleins et/ou **en ce que** le dispositif d'aspersion de conduite de gaz de combustion (16) peut être chauffé au moins partiellement.

11. Dispositif d'aspersion de conduite de gaz de combustion selon la revendication 9 ou 10, **caractérisé en ce que** le système d'alimentation en fluide (22) comprend un dispositif de surveillance du débit (32) pour la surveillance du débit de fluide de refroidissement à évacuer et/ou une robinetterie de régulation (30) ou un diaphragme pour l'adaptation du débit de fluide de refroidissement à évacuer.

12. Dispositif d'aspersion de conduite de gaz de combustion selon la revendication 8, **caractérisé en ce que** le système à gaz de rinçage (36) est relié avec le système d'alimentation en fluide (22) et/ou comprend une robinetterie d'étranglement (40) et un dispositif de surveillance du débit (42) et/ou une robinetterie anti-retour (44).

13. Épurateur de gaz avec un raccord de conduite de gaz de combustion, par l'intermédiaire duquel l'épurateur de gaz (12) est relié par l'intermédiaire d'une conduite de gaz de combustion (10) avec une chaudière de centrale, **caractérisé en ce que**, au niveau du raccord de conduite de gaz de combustion, est disposé un dispositif d'aspersion de conduite de gaz de combustion (16) selon l'une des revendications 8 à 12 pour l'exécution du procédé selon l'une des revendications 1 à 7.

14. Épurateur de gaz selon la revendication 13, **caractérisé en ce que** l'épurateur de gaz (12) fait partie d'une installation de désulfuration de gaz de combustion, plus particulièrement d'une installation de désulfuration de gaz de combustion qui ne comprend pas de dérivation de conduite de gaz de combustion faisant passer un gaz de combustion le long de l'installation de désulfuration de gaz de combustion.

15. Centrale électrique, plus particulièrement centrale électrique au charbon, comprenant un dispositif d'aspersion de conduite de gaz de combustion (16) selon l'une des revendications 8 à 12 pour l'exécution du procédé selon l'une des revendications 1 à 7, ainsi qu'un épurateur de gaz (12) selon la revendication 13 ou 14.
